# EUROPÄISCHE PATENTANMELDUNG

(11) **EP 1 329 760 A2**
(43) Veröffentlichungstag der Anmeldung: **23.07.2003**
(21) Anmeldenummer: 02025338.1
(22) Anmeldetag: 13.11.2002
(51) Int. Cl.: G02B 27/48, G02B 27/28

(54) **Kohärenzminderer**

(30) Priorität: 15.01.2002 DE 10201315
(71) Anmelder: Carl Zeiss Microelectronic Systems GmbH, 07745 Jena (DE)
(72) Erfinder: Engel,Thomas,Dr., 99102 Erfurt Ortsteil Niedernissa (DE)
(74) Vertreter: Breit, Ulrich

(57) **Zusammenfassung**

Zur Verminderung des Speckle-Kontrastes ist vorgesehen in ein Kohärenzminderer mit mindestens einem doppelbrechenden Element (2), das ein zugeführtes kohärentes Strahlenbündel (1) in zwei Teilstrahlbündel (5, 6) aufteilt, die in senkrecht zueinander liegenden Polarisationsrichtungen (7, 8) polarisiert sind, wobei das doppelbrechende Element (2) die Teilstrahlbündel (5, 6) in Strahlrichtung und/oder quer zur Strahlrichtung gegeneinander versetzt abgibt.

## Beschreibung

Die Erfindung bezieht sich auf einen Kohärenzminderer, der einen Strahlengang aufweist, welcher ein zugeführtes, kohärentes Strahlenbündel in mehrere Teilstrahlbündel so aufteilt, daß die Teilstrahlbündel zueinander in Strahlrichtung und/oder quer zur Strahlrichtung versetzt sind und/oder in unterschiedliche Richtungen propagieren.

Für Anwendungen bei denen monochromatische Strahlung geringer Bandbreite benötigt wird, wird üblicherweise Strahlung aus Laser-Lichtquellen eingesetzt, beispielsweise bei Mikroskopen, mit denen von in der Halbleiterfertigung verwendete Masken inspiziert werden, bei der Waferinspektion oder bei Laserprojektoren. Bei Lasern als Lichtquellen eines abbildenden Systems kommen jedoch kohärente Störungen zum Tragen, die in Form sogenannter Speckle auftreten.

Speckle entstehen durch die Interferenz kohärenter Teilwellenzüge eines Lichtbündels bei der Superposition in der Beobachtungsebene. Die kohärenten Teilwellenzüge können beispielsweise von Beugung oder Streuung an Komponenten im optischen Strahlengang herrühren. Da man refraktive Optiken über das Fermat'sche Prinzip beschreiben kann, wirkt eine solche Optik für jeden Bildpunkt in der Beobachtungsebene als Interferometer, d.h. alle vom Objekt ausgehenden Strahlen vereinigen sich in der Beobachtungsebene ohne Phasenverschiebung. Dies gilt allerdings nur für perfekte Optiken, d.h. wenn keine Beugung oder Streuung auftritt. Bei realen optischen Systemen führen Form- und Justierabweichungen sowie Verunreinigungen und Beugungseffekte der einzelnen Komponenten zu geringfügigen Abweichungen, die Phasenverschiebungen verursachen. Diese führen dann bei der kohärenten Superpositionierung der Strahlung in der Beobachtungsebene zu Intensitätsmodulationen, die dann letztlich als Speckle-Muster wahrnehmbar sind.

Speckle stellen somit kohärentes Rauschen dar, das im Endeffekt den möglichen Dynamikbereich für nutzbare Informationen und damit den in einer Beobachtungsebene maximal erzielbaren Bildkontrast herabsetzt. Um den in der Beobachtungsebene erzielbaren maximalen Bildkontrast in Form eines Nutzsignals zu steigern, möchte man deshalb den Kontrast der Speckle in der Beobachtungsebene so weit wie möglich reduzieren.

Für eine solche Reduzierung sind mehrere Verfahren bekannt. Die DE 195 08 754 C2 sieht dabei eine Unterteilung in drei Kategorien vor:
- Verringerung der zeitlichen Kohärenz der Strahlung,
- Verringerung der räumlichen Kohärenz der Strahlung,
- schnelle Bewegung der Speckle, so daß in der Beobachtungsebene eine zeitliche Mittelung erfolgen kann.

Als entsprechende Elemente, die hinsichtlich einer oder mehrerer dieser Kategorien wirken, sind Lichtmischstäbe, diffraktiv optische Elemente, refraktiv optische Elemente oder auch Streuscheiben bekannt. Diese Elemente ändern aber sämtlich die Strahlqualität bzw. den Lichtleitwert des Strahls in starkem, insbesondere in nicht veränderbarem Maß oder sind nicht einfach mit geometrischen Rahmenbedingungen in Einklang zu bringen. Die US 6.191.887 B1 beschreibt eine optische Verzögerungsleitung, die bei einem kohärenten Strahlbündel Teile der Lichtwelle gegenüber der Grundwelle im zeitlichen Durchlauf durch einen Strahlengang verzögern. Auch hier sind in der Verzögerungsleitung strahlqualität- bzw. lichtleitwertverändernde Elemente nötig und der Aufbau ist groß. Darüber hinaus führen solche Elemente nicht zu geradsichtigen Aufbauten.

Der Erfindung liegt deshalb die Aufgabe zugrunde, einen Kohärenzminderer anzugeben, der ein kohärentes Strahlbündel vorzugsweise ohne übermäßige Erhöhung des Lichtleitwertes so umformt, daß der Speckle-Kontrast in einer Beobachtungsebene gesenkt ist, wobei ein kompakter applikationsanpaßbarer Aufbau erreichbar sein soll.

Diese Aufgabe wird durch einen Kohärenzminderer gelöst, der einen Strahlengang aufweist, welcher ein zugeführtes, kohärentes Strahlenbündel in mehrere Teilstrahlbündel so aufteilt, daß die Teilstrahlbündel zueinander in Strahlrichtung und/oder quer zur Strahlrichtung versetzt sind und/oder in unterschiedliche Richtungen propagieren, und in dem mindestens ein doppelbrechendes Element liegt, das ein im Strahlengang einfallendes Strahlenbündel in zwei Teilstrahlbündel aufteilt, die in senkrecht zueinander liegenden Polarisationsrichtungen polarisiert sind.

Die Aufgabe wird weiter durch einen Kohärenzminderer gelöst, der einen Strahlengang aufweist, welcher ein zugeführtes, kohärentes Strahlenbündel in mehrere Teilstrahlbündel so aufteilt, daß die Teilstrahlbündel zueinander in Strahlrichtung und/oder quer zur Strahlrichtung versetzt sind und/oder in unterschiedliche Richtungen propagieren, und in dem mindestens eine planparallele oder keilförmige Platte, die eine im Strahlengang der einfallenden Strahlung zugewandte Vorderseite und eine der einfallenden Strahlung abgewandte Rückseite aufweist, wobei der Strahlengang unter einem Winkel ungleich 90° zur Normalen zur Vorderseite liegt und die Vorderseite von einem einfallenden Strahlbündel ein erstes Teilstrahlbündel reflektiert und ein zweites Teilstrahlbündel transmittiert, das dann von der Rückseite reflektiert wird.

Die Erfindung geht von der Erkenntnis aus, daß die Problematik störender Speckle-Muster um so gravierender ist, desto größer die Kohärenzlänge der verwendeten Strahlung ist. Die Kohärenzlänge ist wiederum mit der spektralen Bandbreite der Strahlung verknüpft; die DE 196 45 978 A1 gibt als Zusammenhang an, daß die Kohärenzlänge invers proportional zur spektralen Bandbreite ist. Eine Verminderung der Kohärenzlänge, die an und für sich wünschenswert wäre, um den Specklekontrast zu senken, führte damit automatisch zu einer Erhöhung der spektralen Bandbreite. Dies ist jedoch applikationsbedingt oftmals nicht möglich.

Deshalb wird erfindungsgemäß die Kohärenzlänge der von der Strahlenquelle stammenden Strahlung nicht verändert.

Die Erfindung setzt stattdessen mittels Polarisation oder Reflexion einen kohärenten Wellenzug in zwei zueinander inkohärente um, so daß die abgegebene Strahlung der Strahlung aus zwei Lichtquellen entspricht, die jeweils in ihren Eigenschaften der Lichtquelle, aus der das Ausgangsstrahlbündel stammt, gleichen, jedoch nicht mehr zueinander interferenzfähige Strahlung liefern. Die Teistrahlbündel sind zeitlich oder räumlich so zueinander verschoben, daß sie gegeneinander versetzt am Kohärenzminderer austreten. Dieser Versatz kann zum einen in Strahlrichtung erfolgen, was einer Verzögerung des einen Teilstrahls gegenüber dem anderen entspricht. Zum anderen kann der Versatz aber auch quer zur Strahlrichtung vorliegen, wodurch optional ein Strahlbündel hinsichtlich des Lichtleitwertes oder der Homogenität des Strahlquerschnittes verändert werden kann.

Das erfindungsgemäße Konzept kann dabei in zwei Alternativen verwirklicht werden, zum einen kann durch geeignete Reflexion an Vorder- und Rückseite der Platte, die schräg zum einfallenden Strahlbündel steht, eine Aufspaltung in zwei zueinander in Strahlrichtung und quer zur Strahlrichtung versetzte Teilstrahlbündel erreicht werden. Wird die Platte keilförmig ausgeführt, divergieren oder konvergieren die Teilstrahlbündel zusätzlich. Zum anderen kann die Aufspaltung auch erreicht werden, wenn ein doppelbrechendes Element verwendet wird, wobei die bei der Ausführungsvariante mit der parallelen Platte durch Teilreflexion bzw. Vollreflexion erfolgte Auftrennung in zwei Teilstrahlen nunmehr in zwei Polarisationsrichtungen durch den Doppelbrechungseffekt bewirkt wird.

Die Variante mit doppelbrechenden Elementen hat den Vorteil, daß der Strahlengang von den doppelbrechenden Elementen im wesentlichen nicht umgelenkt wird, so daß der Aufbau einfacher zu handhaben bzw. zu gestalten ist. Die Variante mit planparalleler oder keilförmiger Platte läßt dagegen größere Freiheit hinsichtlich der Wellenlänge der kohärenten Strahlung. An die Platte wird lediglich die Anforderung hinsichtlich Reflexion bzw. Transmission gestellt, doppelbrechende Eigenschaften, die bekanntermaßen nur bei bestimmten Kristallen in bestimmten Wellenlängenbereichen gegeben sind, sind nicht erforderlich. Dies ist insbesondere für Anwendungen im Ultraviolett-Strahlungsbereich vorteilhaft, da dort mitunter die Auswahl an doppelbrechenden Materialien reduziert ist.

Die Ausbildung der planparallelen oder keilförmigen Platte muß für die Teilreflexion der Strahlung an der Vorderseite und die möglichst vollständige Reflexion der an der Vorderseite transmittierten Strahlung an der Rückseite der Platte Sorge tragen. Dies ist besonders einfach dadurch zu erreichen, daß die Vorder- und Rückseite der Platte jeweils reflektierend ausgebildet sind und der Reflexionsgrad der Vorderseite unter 50 % und der Reflexionsgrad der Rückseite über 80 % liegt. Die Rückseite kann beispielsweise voll verspiegelt werden. Auch ist es möglich hier Totalreflexion einzusetzen.

Soll bei der Kohärenzminderung der Lichtleitwert, in den die geometrischen Parameter des Strahls eingehen, gleich bleiben, ist es zu bevorzugen, daß der Kohärenzminderer eine Verzögerung der Teilstrahlbündel gegeneinander bewirkt. Der derart aus zwei, gegeneinander in Strahlrichtung versetzten Teilstrahlbündeln aufgebaute Strahl entspricht hinsichtlich des damit erreichbaren Speckle-Kontrastes einem Strahl mit geringerer zeitlicher Kohärenzlänge ohne daß die Kohärenzlänge der Teilstrahlen geändert wäre. Dadurch bleibt die spektrale Bandbreite gleich. Eine solche Anordnung bietet sich zur Kombination mit zeitabhängig auf den derart erzeugten Strahl wirkenden Bauteilen an, z.B. Schlierenbildnern, bewegten Spiegeln oder Brechzahlmodulatoren, die den Lichtpfad ändern.

Die beiden Teilstrahlbündel sind vollständig inkohärent, wenn die Baulänge eines doppelbrechenden Elementes so gewählt ist, daß die optische Verzögerung größer ist als die Kohärenzlänge L. Es ist deshalb zu bevorzugen, daß in diesem Fall das doppelbrechende Element eine Baulänge größer U(n₀-nₑ) hat, wobei n₀ die ordentliche und nₑ die außerordentliche Brechzahl des jeweiligen doppelbrechenden Elementes ist. Natürlich kann, um in der Fertigung nur wenige unterschiedliche Bauteile zu benötigen, ein doppelbrechendes Element auch aus Teilelementen zusammengesetzt werden. Es ist deshalb bevorzugt, daß doppelbrechende Elemente aus zwei oder mehr Teilelementen, vorzugsweise gleicher geometrischer Form, aufgebaut sind.

Bei der Variante mit planparalleler oder keilförmiger Platte können ebenfalls vorteilhaft mehrere im Strahlengang hintereinander geschaltete Platten verwendet werden. Setzt man eine planparallele Platte ein, so wird eine optische Verzögerung, die größer ist als die Kohärenzlänge L, dann erreicht, wenn die Dicke der Platte größer oder gleich 0,5 * cos α * L ist, wobei α der Winkel zur Oberflächennormale ist, unter dem die Strahlung auf der Vorderseite der Platte eintritt.

Ein doppelbrechendes Element wirkt ebenso wie eine entsprechende Platte als Verzögerungsstufe, so daß dann mehrere zueinander in- oder teilkohärente Wellenpakete in der Beobachtungsebene auftreffen. Wird die obige Dickenregel eingehalten, ist die Zahl der inkohärenten Lichtbündel verdoppelt.

Derartige Verzögerungsstufen können kaskadiert werden, um eine entsprechende höhere Anzahl an inkohärenten Lichtbündeln zu erhalten. Nach einer bevorzugten Weiterbildung der Erfindung sind deshalb mehrere im Strahlengang hintereinander geschaltete doppelbrechende Elemente vorgesehen, die die Teilstrahlen um mehr als die zeitliche Kohärenzlänge L des zugeführten Strahlbündels in Strahlrichtung gegeneinander versetzt abgeben, planparallel ausgebildet sind und jeweils eine Dicke von mindestens L/(n₀-nₑ) haben.

Eine besonders wirkungsvolle Zerlegung des zugeführten Wellenzuges in Teilwellenzüge bzw. Teilstrahlbündel wird erreicht, wenn die Dicken der einzelnen Verzögerungsstufen nicht gleich sind. Ansonsten könnte der Effekt einer Verzögerungsstufe durch eine andere zum Teil wieder kompensiert werden, wodurch derart entstehende Teilstrahlbündel nicht mehr zueinander inkohärent, sondern nur teilkohärent wären.

Weiter ist es zu bevorzugen, die einzelnen doppelbrechenden Elemente hinsichtlich ihrer optischen Achse zueinander zu verdrehen, so daß die Aufspaltung jeweils in unterschiedliche Polarisationsrichtungen erfolgt. Am wirkungsvollsten ist hierbei eine Verdrehung um 45 Grad, da dadurch die jeweiligen, in zugeführten Strahlbündel enthaltenen Polarisationskomponenten in Anteile mit gleicher Intensität aufgespaltet werden. Prinzipiell sind aber auch beliebige andere Drehwinkel zwischen den einzelnen doppelbrechenden Elementen möglich.

Die meisten in der Optik verwendeten doppelbrechenden Elemente weisen üblicherweise ein geeignetes Kristallmaterial auf. Die Kosten eines solchen Kristallmaterials bemessen sich normalerweise nach dessen Dicke. Aus Kostengesichtspunkten sollte die Gesamtdicke des verwendeten Materials deshalb minimal sein. Für die Minimierung des Bedarfs an doppelbrechendem Material bei optimaler Wirkung ist es bei mehreren doppelbrechenden Elementen zu bevorzugen, daß jedes doppelbrechendes Element eine andere Dicke hat und die Dicke eines Elementes das Doppelte der Dicke des nächst dünneren Elementes beträgt. Bei n Stufen sind die Dicken der doppelbrechenden Elemente dann gemäß der Reihe 2⁽ⁱ⁻¹⁾ * L/(n₀nₑ) gewählt, wobei i von 1 bis n läuft und die Indexgröße für das jeweilige doppelbrechende Element ist.

Die Reihenfolge dieser n doppelbrechenden Elemente im Strahlengang ist frei wählbar und muß nicht der Dickenabstufung entsprechen. Ihre Abfolge kann im Strahlengang willkürlich gewählt werden.

Bei einer nach diesem Optimierungskriterium bestimmten Dickenabstufung entstehen am Ausgang des Kohärenzminderers, der n doppelbrechende Element aufweist, 2ⁿ inkohärente Teilstrahlbündel aus dem kohärenten Strahlbündel. Ausgangsseitig entspricht der Strahl dann der Strahlung von 2ⁿ identischen, jedoch zueinander nicht kohärenten Strahlungsquellen. Diesen Effekt erhält man auch für andere Dickenabstufungen, solange in ihrer Dicke aufeinanderfolgende doppelbrechende Elemente sich immer um mindestens den Faktor 2 unterscheiden. Falls die Dicke geringer ist, ergibt sich jeweils nur eine Auftrennung in teilkohärente Lichtbündel.

Bei reinem Versatz der Teilstrahlbündel in Strahlrichtung verlaufen alle Teilstrahlbündel, die das Ausgangstrahlbündel bilden, exakt im gleichen Lichtweg. Dies erfordert eine hochgenaue Fertigung des/der doppelbrechenden Elemente/s aus homogenem Material. Die einzelnen inkohärenten Teilstrahlbündel unterscheiden sich nur dadurch, daß sie zeitlich gegeneinander versetzt im optischen System propagieren und aufeinanderfolgende Teilstrahlbündel unterschiedliche Polarisationsrichtungen aufweisen. Würde ein derart gemischtes Strahlbündel in der Beobachtungsebene von einem Detektorsystem in einem Meßintervall registriert, bildeten sich von dem inkohärenten Teilstrahlbündel dennoch Speckle-Strukturen, solange keine zeitabhängigen Störungen eine Modifikation bewirken.

Übliche Detektoren haben jedoch eine gewisse Mindestbelichtungszeit, in der sich deshalb einzelne Speckle-Muster inkohärent addieren. Um diese Speckle-Muster voneinander unabhängig zu machen und somit in der Belichtungszeit eine Ausmittelung zu erreichen, ist eine räumliche Trennung der inkohärenten Teilstrahlbündel zweckmäßig.

Im einfachsten Fall kann dieser räumliche Versatz bei einem doppelbrechendem Element, das als planparallele Platte aufgebaut ist, durch eine Neigung der Platte erreicht werden. Bedingt durch die Doppelbrechung ergeben sich dann unterschiedliche Lichtpfade innerhalb des doppelbrechenden Elementes für die Polarisationsrichtungen. Die Teilstrahlbündel werden vom doppelbrechenden Element an unterschiedlichen Austrittsorten abgegeben, wobei der quer zur Strahlrichtung bewirkte Versatz von der Brechzahl und der Dicke des plattenförmigen doppelbrechenden Elementes und dessen Neigungswinkel zur Strahlrichtung abhängt. Im Fall der planparallelen Platte wirken sich sowohl Neigungswinkel als auch Plattendicke auf den Versatz aus.

Dieses Konzept kann man noch weiter ausnutzen, in dem das doppelbrechende Element als Prisma ausgebildet wird, aus dem die Teilstrahlbündel unter unterschiedlichen Winkeln austreten, d.h. das doppelbrechende Element in unterschiedliche Propagationsrichtungen verlassen. Der Winkelunterschied hinsichtlich der Propagationsrichtungen hängt vom Einfallswinkel und vom Keilwinkel des Prismas sowie der ordentlichen und der außerordentlichen Brechzahl des verwendeten Materials bei der betreffenden Wellenlänge des zugeführten kohärenten Strahlenbündels ab. Die zweckmäßigerweise einzustellende Winkelaufspaltung ist ein Maß der Impulsunschärfe des Wellenzuges, welche wiederum von der Strahlcharakteristik der verwendeten Strahlungsquelle abhängt.

Den gleichen Effekt erhält man bei der Variante, bei der Strahlung an Vorder- und Rückseite einer Platte reflektiert wird, wenn diese keilförmig ausgebildet ist. Der Winkelunterschied hinsichtlich der Propagationsrichtungen ist dann gleich dem Keilwinkel der Platte.

Diese Weiterbildungen ermöglichen es darüber hinaus, den Kohärenzminderer auch zur Erhöhung des Lichtleitwertes um ein gewünschtes Maß einzusetzen. Damit kann zum Beispiel für eine Beleuchtung in einem Mikroskop eine wunschgemäße Ausleuchtung des betrachteten Objektfeldes erreicht werden. Weiter bewirkt die Divergenzänderung des Strahlbündels, daß unabhängig Speckle-Muster für die einzelnen kohärenten Teilstrahlbündel entstehen, die dann inkohärent addiert werden. Die Teilstrahlbündel werden dadurch statistisch unabhängig und die Anteile des kohärenten Rauschens aus dem Lichtfeld am Detektor in der Beobachtungsebene mitteln sich mit der inversen Wurzel von 2 hoch der Zahl der keilförmigen Elemente aus, da bei n Elementen 2ⁿ zueinander inkohärente Teilstrahlen entstehen. Natürlich müssen dazu Entartungen, bei denen verschiedene Teilstrahlen wieder überlagert werden, vermieden sein.

Als optionale Weiterbildung kann der Kohärenzminderer mit keilförmig ausgebildeten Elementen auch dazu genutzt werden, um Divergenzwinkelunterschiede des zugeführten kohärenten Strahlbündels in meridionaler und sagitaler Richtung an oder im Idealfall sogar auszugleichen. Solche Divergenzunterschiede, die beispielsweise in der Größenordnung von 1 mrad liegen können, sind bei Laserdioden häufig anzutreffen, bei denen regelmäßig Astigmatismuseffekte stark auftreten.

Es ist dazu zu bevorzugen, daß mehrere doppelbrechende Kristalle, beispielsweise in Prismenoder Keilform, im Strahlengang hintereinander liegen und bezüglich ihrer Kristallausrichtung gegeneinander verdreht sind, vorzugsweise um 45 Grad. Analoges gilt für die Variante mit planparalleler oder keilförmiger Platte.

Eine besonders zweckmäßige Ausgestaltung des doppelbrechenden Elementes verwendet einen optisch einachsigen Kristall, beispielsweise Kalkspat, Calcit oder ADP. Um die erwähnte Verzögerung des einen Teilstrahbündels gegenüber dem anderen zu erreichen, ist es dabei zweckmäßig, den Kristall parallel zur optischen Achse zu schneiden. Soll gleichzeitig ein lateraler, d.h. quer zur Strahlrichtung liegender Versatz bewirkt werden, ist es zweckmäßig einen parallel zur optischen Achse geschnittenen Kristall schräg im Strahlengang anzuordnen. Alternativ kann der Kristall mit einer schrägen Strahlein- oder Austrittsfläche im Strahlengang liegen, wenn die optische Achse des Kristalls senkrecht zur Strahleinfallsrichtung ausgerichtet ist. Wenn man bei schrägem Strahleintritt die Kristallorientierung so wählt, daß die Strahlen mit unterschiedlicher Polarisation im Kristall mit maximalem Unterschied in der Brechzahl verlaufen, werden vorteilhafterweise zwei Effekte erzielt: eine große zeitliche Verzögerung und eine große Winkelaufspaltung. Mit dieser Bauweise ist der Materialbedarf an optisch doppelbrechender Substanz bezogen auf die Verzögerung und die Winkelaufspaltung bzw. den lateralen Versatz minimierbar.

Vorteilhafterweise liegt die z-Achse des Kristalls in der Eintrittsfläche und schließt mit der Einfallsebene (definiert durch Strahlrichtung und Flächennormale der Eintrittsfläche) einen möglichst großen Winkel ein.

Eine im Hinblick auf Kohärenzminderung besonders wirksame Divergenzerhöhung des Strahls erreicht man mit optisch zweiachsigen Kristallen, die konische Refraktion zeigen und entsprechend dazu angeordnet sind. Dies ist mit dem Material LBO möglich.

Natürlich können im erfindungsgemäßen Kohärenzminderer auch zusätzlich refraktive oder diffraktive Elemente eingesetzt werden, die eine Erhöhung der Strahldivergenz bewirken. Ein diesbezüglich besonders einfach herzustellendes Element stellt ein Axikon dar, das eine zusätzliche Strahldivergenz verursacht und somit eine Einstellung des Lichtleitwertes auf einen gewünschten Betrag ermöglicht.

So können beispielsweise ein keilförmiges doppelbrechendes Element oder eine keilförmige Platte verwendet werden, dem oder der im Strahlengang mindestens ein Mikrolinsenarray vorgeordnet ist, wobei eine Abbildung erfolgt, in deren Zwischenbildebene das Element oder die Platte liegt. Das Minilinsenarray mischt dabei die ihm zugeführte Strahlung in seinen Austrittspupillen. Da diese jedoch disjunkt nebeneinander liegen, wird die nachfolgende Abbildung verwendet, in der deren Zwischenbildebene das Element oder die Platte angeordnet ist. Durch diese Lage wird aufgrund der Strahlaufteilung in Teilstrahlen, die durch das doppelbrechende Element oder die Platte erfolgt, eine vollständigere Pupillenfüllung in der Bildebene bewirkt. Es ist deshalb bevorzugt ein erfindungsgemäßer Kohärenzminderer mit einem refraktivem oder diffraktivem Element, das eine Erhöhung der Strahldivergenz bewirkt, insbesondere mit einem Axikon.

Zweckmäßigerweise wird man dabei die Fokusebene des Mikrolinsenarrays in die Aperturebene legen. Natürlich können auch zwei oder mehr Mikrolinsenarrays hintereinander geschaltet werden. Obiges gilt dann für die Fokusebene des letzten Mikrolinsenarrays.

Die Erfindung wird nachfolgend unter Bezugnahme auf die Zeichnungen beispielhalber noch näher erläutert. In der Zeichnung zeigt:
Figur 1 eine schematische Darstellung eines doppelbrechenden Elementes, das einen zugeführten kohärenten Lichtstrahl quer zur Strahlrichtung aufspaltet,
Figur 2 eine Schnittdarstellung eines doppelbrechenden Elementes, dessen optische Achse senkrecht zum einfallenden kohärenten Lichtbündel ist, das jedoch schräge Ein- und Austrittsflächen hat,
Figur 3 eine Darstellung ähnlich der Figur 2, wobei das hier dargestellte doppelbrechende Element senkrecht zur Einfallsrichtung liegende Begrenzungsflächen hat,
Figur 4 eine Darstellung ähnlich der Figur 2, wobei das doppelbrechende Element als Prisma ausgebildet ist,
Figur 5 eine perspektivische Darstellung eines mehrstufigen Kohärenzminderers mit mehreren doppelbrechenden Elementen,
Figur 6 eine Draufsicht auf den Kohärenzminderer der Figur 5,
Figur 7 eine Schnittdarstellung durch eine planparallele Platte, an deren Vorderseite einfallende Strahlung teilweise und an deren Rückseite durch die Vorderseite transmittierte Strahlung vollständig reflektiert wird,
Figur 8 eine Darstellung ähnlich der Figur 7, wobei die Platte keilförmig ist, und
Figur 9 einen optischen Aufbau mit Mikrolinsenarrays und einem doppelbrechenden Element zur Homogenisierung der disjunkten Austrittspupillen des Mikrolinsenarrays.

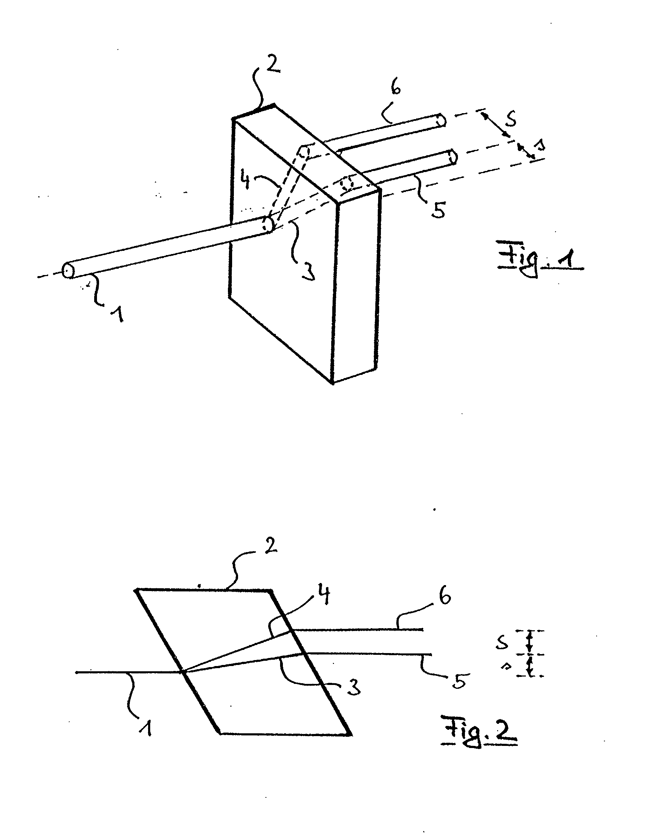

Figur 1 zeigt schematisch den Durchgang eines Strahlbündels 1 durch einen doppelbrechenden Kristall 2, in vorliegendem Beispiel Calcit. Der doppelbrechende Kristall 2 ist im Beispiel der Figur 1 als planparallele Platte ausgebildet, auf den ein Strahlbündel 1 schräg zur Oberflächennormale auftrifft. Das Strahlbündel 1 stammt aus einem Laser und ist unpolarisiert.

Dieses Strahlbündel 1 wird in einen ordentlichen Strahl 3 sowie einen außerordentlichen Strahl 4 gebrochen, wobei die Brechungswinkel durch die ordentliche bzw. die außerordentliche Brechzahl des doppelbrechenden Kristalls 2 gegeben sind. Dabei unterscheidet sich der ordentliche Strahl 3 vom außerordentlichen Strahl 4 hinsichtlich der Polarisation; die beiden Strahlen 3 und 4 sind in senkrecht zueinander liegenden Polarisationsrichtungen polarisiert.

Somit treten ausgangsseitig zwei Teilstrahlen 5 und 6 aus, die in senkrecht zueinander liegenden Polarisationsrichtungen polarisiert sind und aufgrund der unterschiedlichen Brechung in ordentlichem Strahl 3 und außerordentlichem Strahl 4 um einen Versatz S zueinander lateral versetzt sind.

Da das Strahlbündel 1 schräg auf die Eintrittsfläche des doppelbrechenden Kristalls 2 einfällt, ist der Teilstrahl 5, der durch den gebrochenen ordentlichen Strahl 3 bewirkt ist, um einen Versatz s gegenüber der Achse, auf der das Strahlbündel 1 einfällt, seitlich versetzt.

Eine ähnliche Geometrie bezüglich einfallenden und austretenden Strahlen kann mit der in Figur 2 schematisch dargestellten Anordnung erreicht werden. Entsprechende Elemente sind hierbei mit den gleichen Bezugszeichen versehen. In der Ausführungsform der Figur 2 wird ein doppelbrechender Kristall 2 verwendet, dessen optische Achse in der Zeichnungsebene und senkrecht zur Einfallsachse des Strahlbündels 1 liegt. Der optische Kristall 2 der Figur 2 ist planparallel ausgebildet und hat schräg zur Einfallsachse des Strahlbündels 1 liegende Ein- bzw. Austrittsflächen. Bedingt durch dieses schräg liegenden Flächen wird das Strahlbündel 1 gebrochen, wobei hier wiederum eine Aufteilung in ordentlichen Strahl 3 und außerordentlichen Strahl 4 erfolgt.

Auch hier sind außerordentlicher Strahl 4 und ordentlicher Strahl 3 in unterschiedlich, senkrecht zueinander liegenden Richtungen polarisiert und treten als zueinander versetzte Teilstrahlen 6 und 5 an der Austrittsfläche des doppelbrechenden Kristalls 2 aus. Bedingt durch die schrägen Ein-/Austrittsflächen des doppelbrechenden Kristalls 2 ist der ordentliche Strahl 3 um einen Versatz s gegenüber der Einfallsachse des Strahlbündels 1 quer zu dieser Achse versetzt. Der Teilstrahl 5 ist gegenüber dem Teilstrahl 6 zusätzlich um einen weiteren Versatz S versetzt, so daß das Strahlbündel 1 in zwei Teilstrahlen 5 und 6 aufgeteilt ist, die quer zur Strahlrichtung versetzt sind.

Bedingt durch die unterschiedlichen optischen Weglängen des ordentlichen Strahls 3 und des außerordentlichen Strahls 4 ist darüber hinaus eine Verschiebung des Teilstrahles 6 gegenüber dem Teilstrahl 5 erreicht. Je nachdem ob der Kristall 2 positive oder negative Doppelbrechung zeigt tritt eine Verzögerung oder Voreilung auf.

Das Prinzip dieser Verzögerung ist an dem in Figur 3 dargestellten Ausführungsbeispiel besonders gut erkennbar. Hier ist der doppelbrechende Kristall ebenfalls als planparallele Platte ausgebildet, dessen optische Achse senkrecht zur Einfallsachse des Strahlbündels 1 und parallel zur Zeichenebene liegt. Das Strahlbündel 1, das aus einem senkrecht polarisierten Anteil 7 sowie einem parallel polarisierten Anteil 8 zusammengesetzt gedacht werden kann, wird beim Durchgang durch den doppelbrechenden Kristall 2 in zwei Teilstrahlen zerlegt, da der senkrecht polarisierte Anteil 7 eine andere Ausbreitungsgeschwindigkeit im Kristall 2 hat, als der parallel polarisierte Anteil 8.

Ausgangsseitig tritt also ein Strahl 9 aus, der aus zwei überlagerten Teilstrahlen besteht, die gegeneinander um eine Verzögerung t in Strahlrichtung versetzt sind. Der ausgehende Strahl 9 besteht dabei aus einem senkrecht polarisierten Anteil 7 und einem parallel polarisierten Anteil 8, die um den Versatz t zueinander phasenverschoben sind.

Ist der Versatz t größer als die zeitliche Kohärenzlänge des Strahlbündels 1, so entspricht der ausgehende Strahl 9 der Überlagerung zweier Teilstrahlbündel, die zueinander jedoch nicht kohärent sind. Man kann sich den ausgehenden Strahl 9 also als Strahl vorstellen, der aus zwei Strahlungsquellen stammt, die jeweils einen kohärenten Strahl abgeben, wobei die Strahlen aber nicht kohärent zueinander sind.

Figur 4 zeigt eine weitere mögliche Ausführungsform des doppelbrechenden Kristalls, der hier als Prisma 10 ausgebildet ist. Aufgrund dessen doppelbrechender Eigenschaft wird das schräg auf das Prisma 10 einfallende Strahlbündel 1 in einen ordentlichen Strahl 3 und einen außerordentlichen Strahl 4 gebrochen. Die Teilstrahlen 5 und 6 treten dann in unterschiedliche Propagationsrichtungen aus dem Prisma 10 aus.

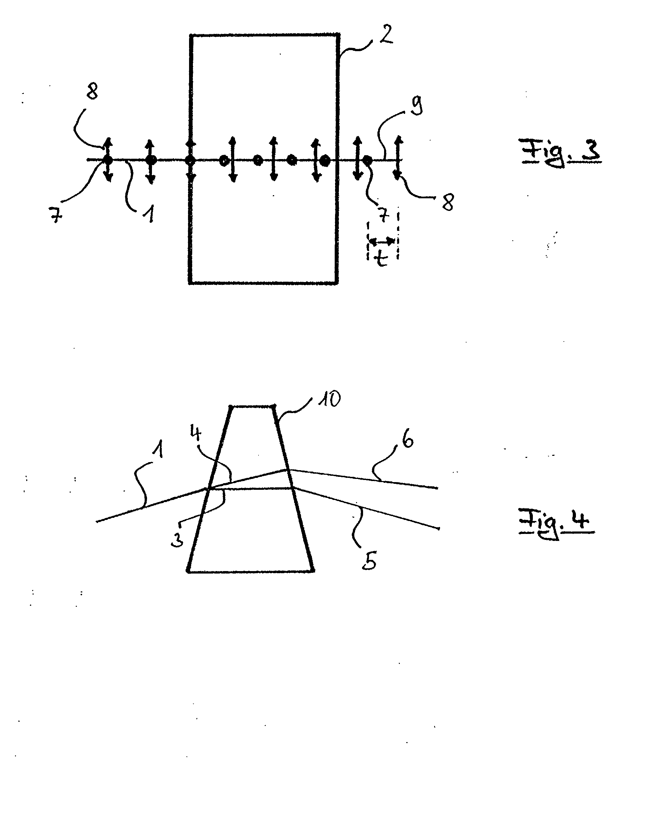

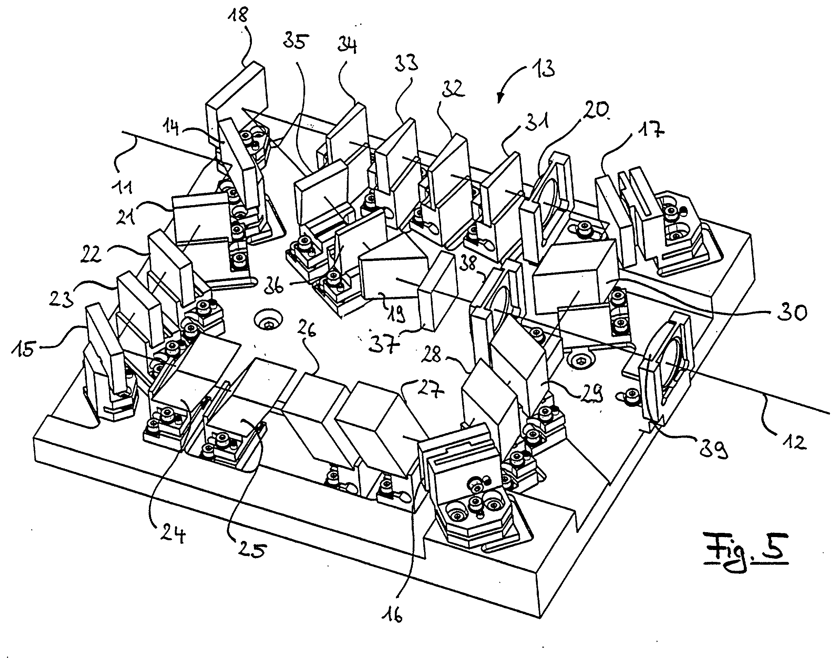

Die anhand der Figuren 1 bis 4 geschilderten Prinzipien zum Aufteilen eines kohärenten Strahlbündels in Teilstrahlen, die in Strahlrichtung oder senkrecht zur Strahlrichtung zueinander versetzt sind oder auch in unterschiedliche Richtungen propagieren, können einzeln oder in Kombination miteinander zur Kohärenzminderung eingesetzt werden. Figur 5 zeigt einen mehrstufigen Kohärenzminderer 13, der alle Ausführungsformen der Figuren 1 bis 4 in vorteilhafter Anordnung vereinigt. Figur 6 zeigt die Anordnung der Figur 5 in Draufsicht.

Die Anordnung formt einen Eingangsstrahl 11 in einen Ausgangsstrahl 12 um, bei dem ein stark verminderter Speckle-Kontrast beobachtet werden kann und der hinsichtlich seiner Strahlcharakteristik an den späteren Einsatz, hier die Beleuchtung in einem Mikroskop, angepaßt ist.

Der Kohärenzminderer 13 weist auf einem optischen Tisch eine Anordnung von Spiegeln und doppelbrechenden Elementen auf, die die Umformung des Eingangsstrahls 11 in den Ausgangsstrahl 12 bewirken. Die optischen Elemente sind aus Platzgründen in einem gefalteten Strahlengang untergebracht, wobei der Strahlengang mehrfach von Spiegeln 14, 15, 16, 17, 18 sowie einem Umlenkprisma 19 umgelenkt wird. Das Umlenkprisma 19 dient dabei neben der Strahlumlenkung auch noch einer weiteren Strahlformung, was später noch erläutert werden wird. Zusätzlich ist zur Formung der Strahldivergenz noch ein Axikon 20 vorgesehen, auf das ebenfalls später auch noch eingegangen werden wird.

Der Eingangsstrahl 11, der am ersten Umlenkspiegel 14 reflektiert ist, wird auf planparallele, gerade geschnittene Verzögerungsplatten 21, 22 und 23 gerichtet, die Calcit als Kristallmaterial aufweisen, dessen optische Achse parallel zu den Eintritts- bzw. Austrittsflächen liegt. Die planparallelen Verzögerungsplatten 21 bis 23 liegen dabei schräg im Strahlengang.

Jede Verzögerungsplatte 21 trennt jedes eingangsseitig zugeführte Strahlbündel entsprechend der Polarisation in Teilstrahlen auf, wobei die Teilstrahlen in senkrecht zueinander liegenden Richtungen polarisiert sind. Durch die Schrägstellung der Platten im Strahlengang wird eine laterale Trennung der Teilstrahlen bewirkt. Die Verzögerungsplatte 21 trennt somit den Eingangsstrahl 11, der vom Umlenkspiegel 14 auftrifft, in zwei Teilstrahlen auf, die in und quer zur Strahlrichtung gegeneinander versetzt sind. Die Verzögerungsplatten 21 und 23 wirken zusammen. In Figur 5 ist der besseren Übersichtlichkeit halber jedoch nur ein Strahl gezeichnet.

Die Orientierung der optischen Achse der Verzögerungsplatte 22 ist gegenüber der Verzögerungsplatte 21 um 45 Grad gedreht, so daß das unpolarisierte Strahlbündel 1 in gegenüber der Verzögerungsplatte 21 anders polarisierte Teilstrahlen aufgeteilt wird. Die Verzögerungsplatte 22 erhält von der Verzögerungsplatte 21 zwei Teilstrahlen und teilt diese ihrerseits in vier Teilstrahlen auf. Zur einfacheren Fertigung und um die Strahlebenen zu erhalten, wirken folgende Kristalle mit parallelen Ein- bzw. Austrittsflächen in Gruppen: 21; (22, 23); (24, 25, 26, 27); (28, 29); 30. Jede Gruppe verdoppelt die Teilstrahlzahl. Ähnliches gilt für nachfolgenden, noch zu erläuternden doppelbrechenden Elemente, die jeweils die Zahl der Strahlen verdoppeln.

Auf den Umlenkspiegel 15 treffen somit 2² Strahlen auf. Sie werden einer Gruppe mit schräg geschnittenen Verzögerungsplatten 25 bis 30 zugeführt, die jeweils eine Strahlumformung analog des in Figur 2 dargestellten Konzeptes bewirken, wobei die einzelnen Verzögerungsplatten 24 bis 30 jeweils die folgende Lage ihrer optischen Achsen aufweisen: Die Verzögerungsplatte 21 liegt mit ihrer optischen Achse in einer ersten Richtung. Die optischen Achsen der Verzögerungsplatten 22 und 23 sind in einer zweiten Richtung, um 45° gedreht zur ersten Richtung angeordnet. Die optischen Achsen der Verzögerungsplatten 24-27 und 30 liegen in der ersten, die der Verzögerungsplatten 28 und 29 in der zweiten Richtung.

Die schräg geschnittenen Verzögerungsplatten 24 bis 30 haben dabei, genauso wie die gerade geschnittenen Verzögerungsplatten 21 bis 23 eine bestimmte Dickenabstufung dahingehend, daß die von ihnen bewirkten zeitlichen Verzögerungen sich jeweils um den Faktor 2 voneinander unterscheiden.

Wie in Figur 6 gut zu erkennen ist, bringt die Durchstrahlung jeder planparallelen Platte einen Versatz aller Strahlen mit sich, der beispielhaft anhand der schräg geschnittenen Verzögerungsplatte 28 mit s bezeichnet dargestellt ist.

Aus der Verzögerungsplatte 30 treten dann 2⁵ Teilstrahlen aus und werden vom Umlenkspiegel 17 über das Axikon 20, dessen Funktion noch erläutert wird, auf eine Abfolge von doppelbrechenden Elementen 31 bis 36 gelenkt, die als Keilplatten, d.h. als Prismen aus kristallinen Quarz ausgebildet sind. Die Keilwinkel der Prismen unterscheiden sich dabei jeweils voneinander. In der Ausführungsform werden abwechselnd Keilwinkel von 4,5° und 8,5° verwendet, damit sich die Teilbündel nicht überlappen, sondern möglichst stoßstellenfrei aneinander anschließen. Die Ausrichtung der Kristalle ist so gewählt, daß die Aufspaltung von den jeweiligen Prismen in um jeweils 45 Grad zueinander beabstandete Polarisationsrichtungen erfolgt. Die optischen Achsen liegen in der jeweiligen Eintrittsfläche, wobei Prismen, deren optische Achse in einer ersten Richtung liegt, mit Prismen abwechseln, deren optische Achse um 45° dazu gedreht ist.

Die durch die Prismen 31 bis 36 bewirkte Umlenkung des Strahls in wechselnde Propagationsrichtungen ist in der Draufsicht der Figur 6 bei den Prismen 31 bis 34 gut zu erkennen. Hier ist auch zu sehen, daß die Prismen vorteilhafterweise jeweils schräg durchstrahlt werden. Nachdem die Prismen 31 bis 36 die zugeführten 2⁵ Strahlbündel in 2⁶ verschiedene Richtungen divergierend aufgeweitet haben, werden die Strahlbündel von einem Umlenkprisma 19 auf eine planparallele Verzögerungsplatte 37 gelenkt, die der Verzögerungsplatte 21 entspricht und die Lichtintensität an jeden Ort auf die zwei Polarisationsrichtungen gleichverteilt.

Das derartige umgeformte Strahlbündel wird dann mittels zwei Zylinderlinsen 38 und 39 an die Geometrie des auszuleuchtenden Feldes angepaßt, um bei einem Laser, der einen Strahl mit rechteckigem Querschnitt emittiert, wobei die Divergenzen in den zwei Richtungen quer zur Ausbreitungsrichtung unterschiedlich sind, einen quadratischen Querschnitt mit näherungsweise isotroper Divergenz zu erreichen. Der Ausgangsstrahl 12 ist dann hinsichtlich Strahlquerschnitt und Divergenz an einen gewünschten Lichtleitwert angepaßt; die Darstellung in Figur 5 als Strich stellt deshalb nur die Mittelachse des Strahbündels dar.

Zur weiteren Erhöhung der Strahldivergenz ist im Strahlengang ein Axikon 20 vorgesehen. Statt eines Axikons kann aber auch jedes andere, eine Strahldivergenz bewirkende refraktive oder diffraktive Element, z.B. ein DOE, verwendet werden.

Das Umlenkprisma 19 bewirkt eine geeignete Umlenkung auf die Verzögerungsplatte 37 hin. Zusätzlich wird noch eine doppelbrechende Wirkung des Umlenkprismas 19 ausgenutzt.

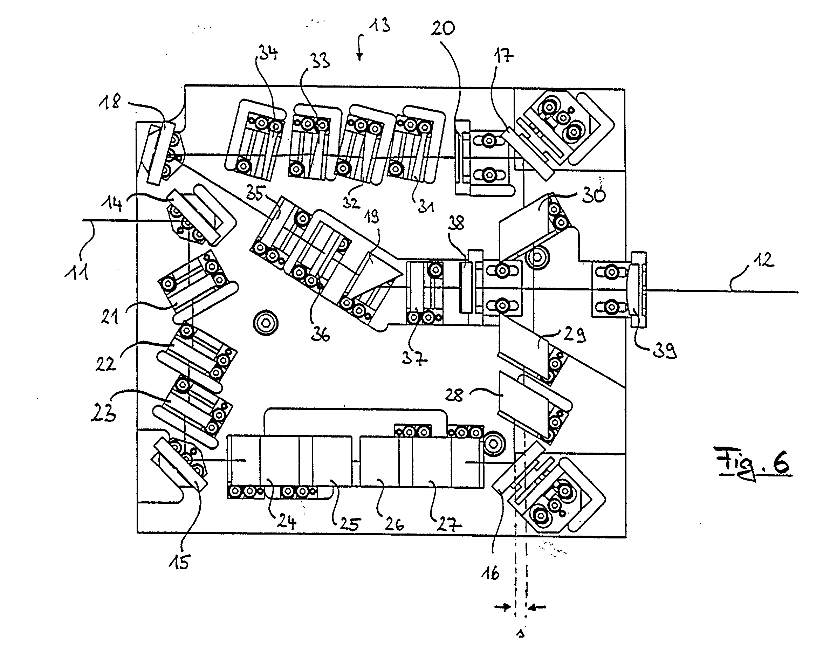

Alternativ zu einem doppelbrechenden Element 2 kann auch eine Platte 40 verwendet werden, wie sie in Schnittdarstellung in Figur 7 gezeigt ist. Die Platte 40 besteht aus einem Material, das bei der Wellenlänge der bezüglich der Kohärenz zu verändernden Strahlung transparent ist und eine Brechzahl n₁ aufweist. Die Platte 40 hat eine Vorderseite 41 und eine Rückseite 42, wobei die zu verändernde Strahlung als Strahlbündel 43 auf die Vorderseite 41 fällt. Das Strahlbündel 43 der einfallenden Strahlung fällt unter einem Winkel α zur Oberflächennormale auf die Vorderseite 41. Die Vorderseite 41 ist teilverspiegelt und weist einen Reflexionsgrad unter 50 % auf. Bedingt durch die Teilverspiegelung wird ein Teil des einfallenden Strahlbündels 43 durch die Vorderseite 41 transmittiert und fällt auf die Rückseite 42. Diese ist ebenfalls reflektierend ausgebildet, wobei der Reflexionsgrad größer ist, als der der Vorderseite. Die an der Rückseite 42 reflektierte Strahlung tritt an der Vorderseite aus. Das Strahlbündel 43 der einfallenden Strahlung wird somit in zwei Teilstrahlbündel 44 und 45 aufgeteilt; ein erstes Teilstrahlbündel 44 stammt aus den direkt an der Vorderseite 41 reflektierten Strahlungsanteilen des Strahlbündels 43 und ein zweites Teilstrahlbündel 45 wurde an der Rückseite 42 reflektiert. Weitere Mehrfachreflexe finden nur in vernachlässigbarem Umfang statt.

Da nicht an der Rückseite 42 reflektierte Strahlung verloren geht, ist es zu bevorzugen, daß die Rückseite 42 möglichst vollständig verspiegelt wird, wobei ein Reflexionsgrad über 80 % anzustreben, ein Reflexionsgrad über 90 % zweckmäßig und ein Reflexionsgrad in der Größenordnung von 99 % und größer besonders vorteilhaft ist, um Strahlungsverluste zu minimieren.

Bedingt durch die unterschiedlichen Reflexionsorte der beiden Teilstrahlbündel 44 und 45 sind diese quer zur Strahlrichtung um einen Abstand S voneinander beabstandet. Da das Teilstrahlbündel 45 weiter zweimal durch die Platte 40 läuft, ist es darüber hinaus in Strahlrichtung gegenüber dem Teilstrahlbündel 44 um eine Verzögerung t in Strahlrichtung versetzt. Diese ist in Figur 7 beispielhalber durch einen Doppelpfeil (bezüglich Teilstrahl 44) und einem Punkt (bezüglich Teilstrahl 45) veranschaulicht. Die Verzögerung t sowie der laterale Versatz S hängen vom Winkel α, sowie der Brechzahl des Mediums aus dem die Strahlung 43 einfällt, der Brechzahl n₁ der Platte 40 sowie der Dicke d der Platte 40 ab.

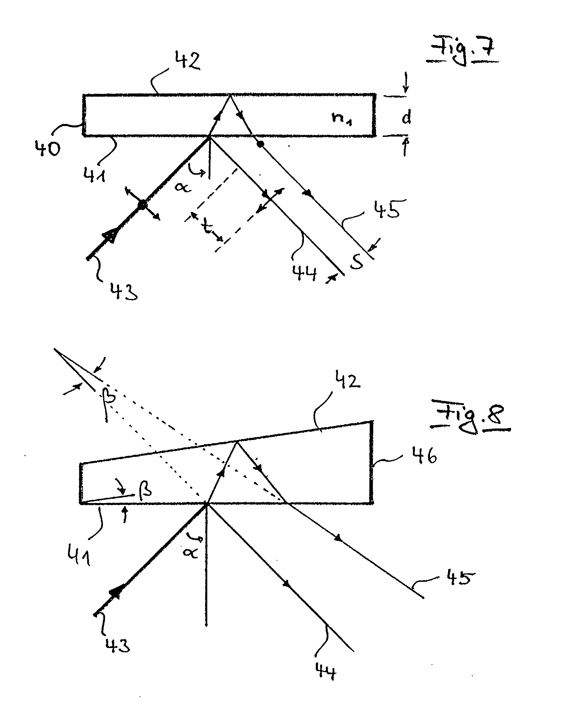

Analog zu dem als Prisma 10 ausgebildeten doppelbrechenden Element der Figur 4 kann die Platte auch als keilförmige Platte 46 mit einem Keilwinkel β ausgebildet werden. Dies zeigt Figur 8. Der Keilwinkel β führt dabei bei einem unter einem Winkel α zur Normalen der Vorderseite 41 der Platte 46 einfallenden Strahlung zu einem Divergenzwinkel der beiden Teilstrahlen 44 und 45 in dazu proportionaler Größe. Ansonsten entsprechen die Verhältnisse bei der keilförmigen Platte 46 denen der planparallelen Platte 40, so daß diesbezüglich auf die Beschreibung der Figur 7 verwiesen werden kann.

Die Platten 40 und 46 können in einem mehrstufigen Kohärenzminderer, wie er in den Figuren 5 oder 6 gezeigt ist, die doppelbrechenden Element teilweise oder zu Gänze ersetzen. Allerdings ist an jeder Platte 40 bzw. 46 eine entsprechende Umlenkung der optischen Achse zu berücksichtigen.

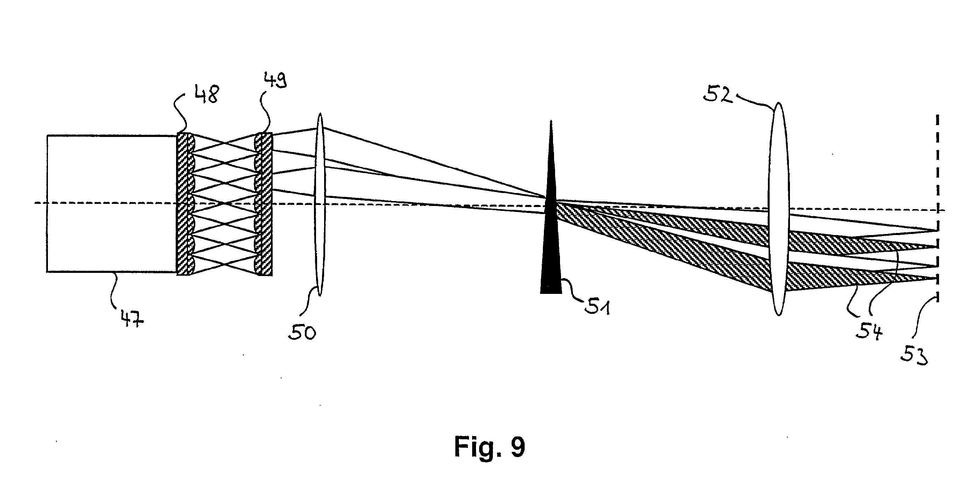

Die keilförmige Platte 46 der Figur 8 bewirkt ebenso wie das Prisma 10 als doppelbrechendes Element, daß im austretenden Strahlbündel 43 zusätzliche Richtungen auftreten. Diese zusätzlichen Richtungen können besonders vorteilhaft in Kombination mit weiteren Bauteilen zur Kohärenzminderung eingesetzt werden. Figur 9 zeigt ein Ausführungsbeispiel dazu, bei dem ein einfallendes Strahlbündel 47 auf zwei hintereinander geschaltete Mikrolinsenarrays 48 und 49 fällt. Die Austrittsaperturen des Mikrolinsenarrays 49 werden durch ein optisches System, von dem schematisch zwei Linsen 50, 52 eingezeichnet sind, in eine Beobachtungsebene 53 abgebildet. In einer Zwischenbildebene dieser Abbildung befindet sich ein optisches Element 51, das die einfallende Strahlung in Teilstrahlbündel, die in verschiedene Richtungen divergiert, auftrennt. Dabei kann es sich beispielsweise um ein Prisma 10 gemäß Figur 4 oder eine keilförmige Platte gemäß Figur 8 handeln. Durch die zusätzlichen Richtungen, die dieses Element durch Auftrennung aus dem Strahlenbündel, das auf das Element 51 fällt, erzeugt, entstehen in der Beobachtungsebene 53 zusätzliche Foki 54, so daß das ursprünglich von den Mikrolinsenarrays 48 und 49 erzeugte Aperturfeld besser gefüllt ist. Zur weiteren Steigerung kann dann ausgehend von der Beobachtungsebene 53 eine nochmalige Abbildung erfolgen, bei der ein weiteres Element, entsprechend dem Element 51, in eine Zwischenbildebene geschaltet wird, um eine gesteigerte Feldfüllung zu erreichen.

Dies kann noch weiter verbessert werden, wenn bei der Abbildung eine bewußte Defokussierung vorgenommen wird. Dann steigt die Feldfüllung nochmals.

Statt der Abbildung mit Zwischenbildebene, kann das optische System auch so ausgebildet werden, daß das optische Element 51 vom parallelen Strahlenbündel in einem teilzentrischen Strahlengang durchsetzt wird.

## Patentansprüche

1. Kohärenzminderer, der einen Strahlengang aufweist, welcher ein zugeführtes, kohärentes Strahlenbündel (1) in mehrere Teilstrahlbündel (5, 6) so aufteilt, daß die Teilstrahlbündel zueinander in Strahlrichtung und/oder quer zur Strahlrichtung versetzt sind und/oder in unterschiedliche Richtungen propagieren, und in dem mindestens ein doppelbrechendes Element (2) liegt, das ein im Strahlengang einfallendes Strahlenbündel (1) in zwei Teilstrahlbündel (5, 6) aufteilt, die in senkrecht zueinander liegenden Polarisationsrichtungen (7, 8) polarisiert sind.

2. Kohärenzminderer nach Anspruch 1, mit mehreren im Strahlengang hintereinander geschalteten doppelbrechenden Elementen (21-30), die die Teilstrahlen jeweils um mehr als die zeitliche Kohärenzlänge L des zugeführten Strahlbündles (11) in Strahlrichtung gegeneinander versetzt abgeben, in Strahlungsrichtung planparallel ausgebildet sind und jeweils eine Dicke von mindestens L/(n₀-nₑ) haben, wobei n₀ die ordentliche und nₑ die außerordentliche Brechzahl des jeweiligen doppelbrechenden Elementes (21-30) bezeichnet.

3. Kohärenzminderer nach Anspruch 2, wobei doppelbrechende Elemente aus zwei oder mehr Teilelementen, vorzugsweise gleicher geometrischer Form, aufgebaut sind.

4. Kohärenzminderer nach Anspruch 2 oder 3, bei dem jedes doppelbrechende Element (21 - 30) ein andere Dicke hat und die Dicke eines Elementes (21-30) das Doppelte der Dicke des nächst dünneren Elementes (21-30) beträgt.

5. Kohärenzminderer nach einem der obigen Ansprüche, bei dem ein doppelbrechendes Element als Prisma (10, 31-36) ausgebildet ist, aus dem die Teilstrahlen (5, 6) unter unterschiedlichen Winkeln austreten.

6. Kohärenzminderer nach einem der obigen Ansprüche, bei dem ein doppelbrechendes Element (21-36) einen optisch einachsigen Kristall aufweist.

7. Kohärenzminderer nach Anspruch 1 oder 6, mit mehreren doppelbrechenden Elementen (21-36), die im Strahlengang hintereinander liegen und deren optische Achsen gegeneinander verdreht sind, vorzugsweise um 45°.

8. Kohärenzminderer nach Anspruch 6 oder 7, bei dem der Kristall (21-29) parallel zur optischen Achse geschnitten ist.

9. Kohärenzminderer nach Anspruch 8, bei dem der Kristall (21-29) mit seiner Strahleinund/oder Austrittsfläche schräg im Strahlengang liegt.

10. Kohärenzminderer nach einem der obigen Ansprüche, mit einem optisch-zweiachsigen Kristall, der konische Refraktion zeigt.

11. Kohärenzminderer, der einen Strahlengang aufweist, welcher ein zugeführtes, kohärentes Strahlenbündel (1) in mehrere Teilstrahlbündel (5, 6) so aufteilt, daß die Teilstrahlbündel zueinander in und quer zur Strahlrichtung versetzt sind und/oder in unterschiedliche Richtungen propagieren, und in dem mindestens eine planparallele oder keilförmige Platte, die eine im Strahlengang der einfallenden Strahlung zugewandte Vorderseite und eine der einfallenden Strahlung abgewandte Rückseite aufweist, wobei die Strahlung unter einem Winkel ungleich 90° zur Normalen auf die Vorderseite einfällt und die Vorderseite von einem einfallenden Strahlbündel ein erstes Teilstrahlbündel reflektiert und ein zweites Teilstrahlbündel transmittiert, das dann von der Rückseite reflektiert wird.

12. Kohärenzminderer nach Anspruch 11, bei dem die Vorder- und Rückseite der Platte reflektierend ausgebildet sind und für die einfallende Strahlung der Reflexionsgrad der Vorderseite unter 50 % und der Reflexionsgrad der Rückseite über 80 % liegt.

13. Kohärenzminderer nach einem der Ansprüche 11 oder 12 mit mehreren im Strahlengang hintereinander geschalteten Platten.

14. Kohärenzminderer nach einem der Ansprüche 11 bis 13, bei dem eine planparallele Platte mit ihrer Oberflächennormalen und einem Winkel α ≠ 0° zur einfallenden Strahlung liegt und die Dicke der Platte größer oder gleich 0,5*cos α mal der Kohärenzlänge der einfallenden Strahlung ist.

15. Kohärenzminderer nach einem der obigen Ansprüche, mit einem refraktivem oder diffraktivem Element (20, 38, 39), das eine Erhöhung der Strahldivergenz bewirkt, insbesondere mit einem Axikon (20).

16. Kohärenzminderer nach Anspruch 1 mit einem keilförmigen doppelbrechenden Element oder nach Anspruch 11 mit einer keilförmigen Platte, wobei im Strahlengang mindestens ein Mikrolinsenarray vorgesehen ist, dem eine Abbildungsoptik (50, 52) nachgeschaltet ist, in deren Strahlengang das Element oder die Platte liegt.
